# EUROPEAN PATENT APPLICATION

(11) **EP 4 442 530 A1**
(43) Date of publication of application: **09.10.2024**
(21) Application number: 23305523.5
(22) Date of filing: 07.04.2023
(51) Int. Cl.: B61D 17/18, B61D 27/00, B60H 1/00

(54) **MODULAR CEILING FOR RAILWAY VEHICLES, AND RAILWAY VEHICLE COMPRISING SUCH MODULAR CEILING**

(71) Applicant: ALSTOM Holdings, 93400 Saint-Ouen-sur-Seine (FR)
(72) Inventor: BAVANDI, Ismael, 59200 TOURCOING (FR)
(74) Representative: Lavoix

(57) **Abstract**

Modular ceiling (100) for a railway vehicle, comprising at least:
- a first panel (1) which is suitable to be part of or associated to an air duct (101) arranged for circulating air inside the railway vehicle, said first panel (1) being suitable to be installed in and extending along a longitudinal axis (X) of the railway vehicle;
- a first profile (3) which is configured for being connected to one side of the first panel (1) and extends along said longitudinal axis (X);
- a second profile (4) which is suitable to be installed in the railway vehicle extending along said longitudinal axis (X) facing to and spaced apart from the first profile (3), wherein an air gap (A1) is formed between the first and second profiles (3, 4) along said longitudinal axis (X);
- a first air diffuser profile (7) which is suitable to be installed in the railway vehicle at said air gap (A1) between said first and second profiles (3, 4) and in a position adjustable along a direction (Y) transversal to said longitudinal axis (X) to adapt the orientation and/or distribution of air flows via the air gap (A1) itself.

## Description

The present invention relates to a ceiling for railway vehicles, and in particular to an improved ceiling having a modular structure, and to a railway vehicle comprising such modular ceiling.

The modular ceiling according to the present invention is particularly suitable for being used in passengers railway vehicles and will be described by making reference to such application without intending in any way to limit its possible application to any type of railway vehicles, be them for passengers, or for freight vehicles, used in trains, metros, etc..

A solution typically used nowadays for realizing ceilings of railway vehicles, such as those used for transport of passengers, foresees the realization of a very wide and large profile, usually made of aluminum, which is first extruded and then machined in order to obtain needed apertures and outlets of various shapes, for example for diffusing light, for circulating air, for installing holding bars, etc.

This solution is somehow complex, expensive and more importantly not flexible enough since, once the profile is machined with the various openings and/or outlets, in practice it does not allow to customize the initial configuration adopted.

Further, when in use, this solution may not be fully efficient in terms of airflow due to edge effects caused by the apertures/outlets machined, may be prone to easy accumulation of dust in certain zones difficult to be reached and properly cleaned.

Finally, also from an aesthetic point of view, this solution is not optimal since the various apertures/outlets machined may render visible to passengers the vanes lined by the ceiling profile, inside which vanes various technical components, networks of ducts, cables et cetera, are installed.

The present invention is aimed at facing and at least partially mitigating at least some of the above issues.

In particular, this aim is achieved by a modular ceiling for a railway vehicle, characterized in that it comprises at least:
- a first panel which is suitable to be part of or associated to an air duct arranged for circulating air inside the railway vehicle, said first panel being suitable to be installed in and extending along a longitudinal axis of the railway vehicle;
- a first profile which is configured for being connected to one side of the first panel and extends along said longitudinal axis;
- a second profile which is suitable to be installed in the railway vehicle extending along said longitudinal axis facing to and spaced apart from the first profile, wherein an air gap is formed between the first and second profiles along said longitudinal axis;
- a first air diffuser profile which is suitable to be installed in the railway vehicle at said air gap between said first and second profiles and in a position adjustable along a direction transversal to said longitudinal axis to adapt the orientation and/or distribution of air flows via the air gap itself.

Preferred embodiments of the modular ceiling according to the present invention are specified in the dependent claims, the contents of which have to be understood as an integral part of this description.

The present invention also encompasses a railway vehicle comprising a modular ceiling as above indicated, and in particular as disclosed in the following description and defined in the appended claims.

Further characteristics and advantages will become apparent from the description of some preferred but not exclusive exemplary embodiments of a switch machine according to the present disclosure, illustrated only by way of non-limitative examples with the accompanying drawings, wherein:
Figure 1 is a front view, schematically showing possible embodiments of a modular ceiling according to the invention;
Figures 2-6 are views showing some exemplary embodiments of profiles which can be used in the modular ceiling according to the invention;
Figure 7 schematically shows a cover plate which can be used in the modular ceiling according to the invention.

It should be noted that in the detailed description that follows, identical or similar components, either from a structural and/or functional point of view, have the same reference numerals, regardless of whether they are shown in the same or different embodiments of the present disclosure.

It should also be noted that in order to clearly and concisely describe the present disclosure, the drawings may not necessarily be to scale and certain features of the disclosure may be shown in somewhat schematic form.

Further, when the term "configured" or "arranged" or "configured" or "shaped" or "adapted" is used herein while referring to any component as a whole, or to any part of a component, or to a combination of components/parts, it has to be understood that it means and encompasses correspondingly either the structure, and/or configuration, and/or form, and/or positioning, of the component(s) or part(s) thereof that such term refers to.

In addition, when the term "about", or "substantial", or "substantially" is used herein, it has to be understood as encompassing an actual variation of plus or minus 5% with respect to an indicated reference value, axis, time or position, and when the term transversal or transversally is hereby used, it has to be understood as encompassing a direction non-parallel to the reference part(s) or direction(s)/axis it refers to, and perpendicularity has to be considered a specific case of transverse direction.

Finally, in the following description and claims, the numeral ordinals first, second, et cetera..., will be used only for the sake of clarity of description and in no way they should be understood as limiting for whatsoever reason; in particular, the indication of a component/part referred to for instance as the "third ..." does not imply necessarily the presence or strict need of the preceding "first" or "second" ones, nor that the order first, second, etc. should be necessarily the one described in the illustrated exemplary embodiment(s).

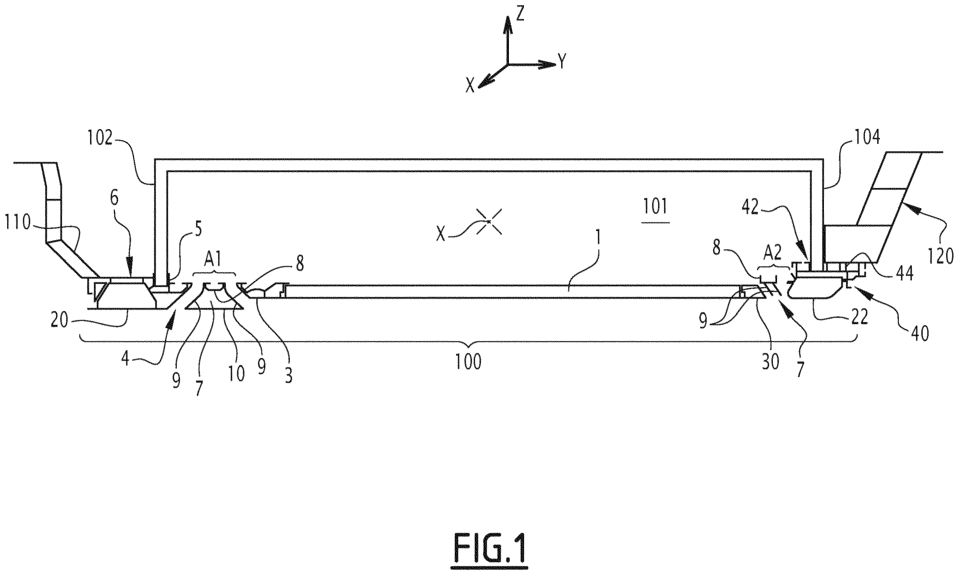

Figure 1 schematically illustrates a modular ceiling for a railway vehicle, which is seen frontally in a plan Y-Z, transversal to a longitudinal direction X of the railway vehicle, and is indicated by the overall reference number 100.

The modular ceiling 100 comprises at least a first panel 1, a first profile 3, a second profile 4, and a first air diffuser profile 7.

The first panel 1 is for example illustrated in figure 1 located in a substantially central position of the modular ceiling 100, and is suitable to be part of or associated to an air duct 101.

The air duct 101 is arranged for circulating air inside the railway vehicle according to solutions well known or readily and easily implementable by those skilled in the art, and therefore is not described in details hereby.

In particular, in the modular ceiling 100 according to the invention, the first panel 1, which has for example the shape of a flat panel, is suitable to be installed in and to extend along the longitudinal axis X of the railway vehicle.

The first profile 3 has a shaped body which is configured to be connected to one side of the first panel 1, for example on a left side with reference to the front view illustrated in figure 1, and also to extend along the longitudinal axis X.

The second profile 4 has a respective shaped body which is suitable to be installed in the railway vehicle extending along the longitudinal axis X, for example on a left side of the railway vehicle with reference to the front side illustrated in figure 1.

In particular, the second profile 4 is suitable to be positioned facing to and spaced apart from the first profile 3.

In this way, an air gap A1 is formed between the first and second profiles 3, 4 along the longitudinal axis X.

In one possible embodiment, as illustrated in figure 1, the second profile 4 is located to form a side part of the modular ceiling 100, and comprises a first portion 5 suitable to be connected to a first side 102 of the air duct 101, and a second portion 6 suitable to be connected to a supporting frame 110 of the railway vehicle.

For example, in one possible embodiment, the second profile 4 is devised for being associated with components of a light system of the railway vehicle.

For instance, according to this embodiment, and as schematically represented in figure 1, the ceiling 100 may comprise a first lining profile 20 which is configured to be connected to the second profile 4 so as to line at least partially, the shaped body of the second profile 4.

In this way, the first lining profile 20 may form the side part of the ceiling 100 visible to passengers.

Further, once connected together, the first lining profile 20 and the first profile 3 surround, together with the first side 102 of the air duct 101 and the supporting frame 110, a space inside which the components of the lighting system, as well as other components, are housed and rendered not visible for example to passengers.

In such a case, the first lining profile 20 can be realized in a material transparent, and in any case it can be suitable for diffusing light inside the railway vehicle.

The first air diffuser profile 7 has a shaped body which is suitable to be installed in the railway vehicle at the air gap A1 between the first and second profiles 3, 4.

In particular, in the modular ceiling 100 according to the invention, the first air diffuser profile 7 is installed in a position adjustable along the direction Y transversal to the longitudinal axis X, to adapt the orientation and/or distribution of airflows via the modification of the air gap A1 itself.

According to some possible examples, on the side opposite to that where the first and second profiles 3 and 4 are placed, the modular ceiling 100 according to the invention can comprise:
- a third profile 30 having a shaped body which is configured to be connected to the side of the first panel 1 opposite to the side where the first profile 3 is connected, and also extending along the longitudinal axis X;
- a fourth profile 40 having a shaped body which is suitable to be installed in the railway vehicle extending along the longitudinal axis X, for example on a right side of the railway vehicle opposite to the side where the second profile 4 is installed.

In particular, the fourth profile 40 is suitable to be positioned facing to and spaced apart from the third profile 30.

In this way, a further air gap A2 is formed between the third and fourth profiles 30, 40 on the right side of the railway vehicle, along the longitudinal axis X.

In one possible embodiment, as illustrated in figure 1, the fourth profile 40 is located to form a side part of the modular ceiling 100, and comprises a first portion 42 suitable to be connected to a second side 104 of the air duct 101 opposite to the first side 102, and a second portion 44 suitable to be connected to a supporting frame 120 of the railway vehicle.

In one possible example, and similarly to the second profile 4, the fourth profile 40 may be devised for being associated with components of a light system of the railway vehicle.

For instance, according to this embodiment, and as schematically represented in figure 1, the ceiling 100 may comprise a second lining profile 22 which is configured to be connected to the fourth profile 40 so as to line at least partially, the shaped body of the fourth profile 40 itself.

In this way, the second lining profile 22 may form the right side part of the ceiling 100 visible to passengers.

Further, once connected together, the second lining profile 22 and the fourth profile 40 surround, together with the side 104 of the air duct 101 and the support frame 120, a further space inside which the components of the lighting system, as well as other components, are housed and rendered not visible for example to passengers.

In such a case, also the second lining profile 22 can be realized in a material transparent, and in any case it can be suitable for diffusing light inside the railway vehicle.

Further the first lining profile 20 and/or the second lining profile 22 can have any suitable shape, for example substantially flat or curved.

The modular ceiling 100 according to the invention can further comprise a second air diffuser profile, also indicated by the same reference number 7, which has a shaped body which is suitable to be installed in the railway vehicle at the air gap A2 between the third and fourth profiles 3, 4.

In particular, in the modular ceiling 100 according to the invention, also the second air diffuser profile 7 is installed in a position adjustable along the direction Y transversal to the longitudinal axis X, to adapt the orientation and/or distribution of airflows via the modification of the air gap A2.

In one possible embodiment, the third profile 30 can be substantially identical to the first profile 3, the fourth profile 40 can be substantially identical to the second profile 4, and the second air diffuser profile 7 can be substantially identical to the first air diffuser 7, thus realizing a substantially symmetrical configuration with respect to a vertical axis of symmetry of the air duct 101.

Alternatively, as schematically illustrated in figure 1, the third profile 30 may have a shaped body different from that of the first profile 3, and/or the fourth profile 40 may have a shaped body different from that of the second profile 4, and/or the second air diffuser profile 7 can have a shaped body different from that of the first air profile 7.

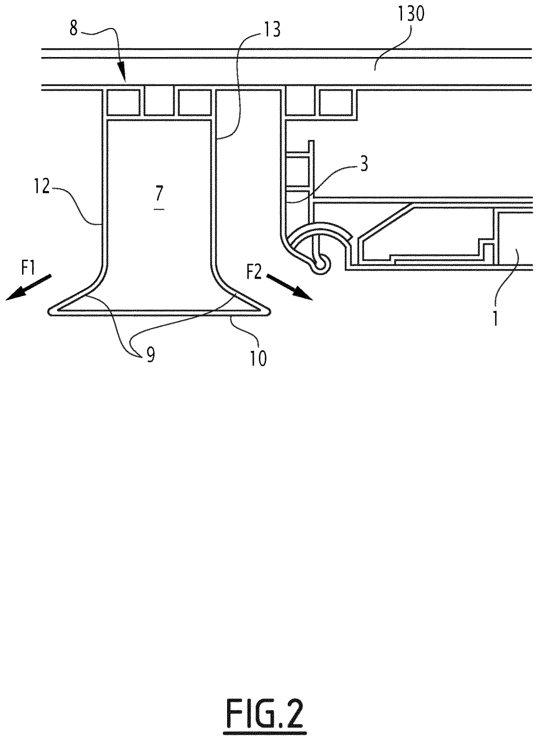

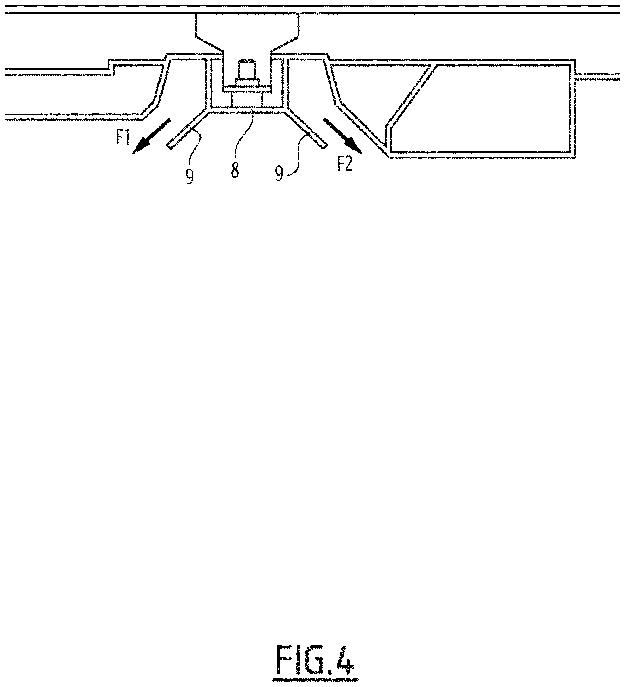

In some possible embodiments, each of the first air and second air diffuser profiles 7 has a shaped body configured to provide a bidirectional distribution of airflows inside the railway vehicle, as for example illustrated on the left side of figure 1 and in figures 2 and 4 (see arrows F1 and F2 indicating the corresponding airflows provided).

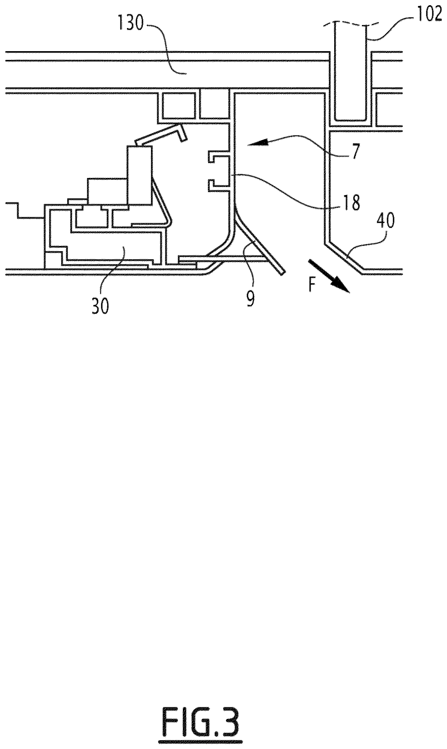

In another possible embodiments, each of the first and second air diffuser profiles 7 has a shaped body configured to obtain a mono-directional distribution of airflows inside the railway vehicle, as for example illustrated on the right side of figure 1 and in figures 3, 5 and 6 (see arrow F indicating the airflow provided).

Clearly, the modular ceiling 100 can comprise a combination of air diffuser profiles 7, where for instance both air diffuser profiles 7 are shaped to provide bidirectional airflows or alternatively mono-directional airflows, or one profile 7 can be configured to provide bidirectional airflows and the other mono-directional airflows.

In one possible embodiment, at least the first air diffuser profile 7 is configured to be removed independently from the first and second profiles 3, 4 (and the third and fourth profiles 30, 40 as well).

In one possible embodiment, at least the second air diffuser profile 7 is configured to be removed independently from the third and fourth profiles 30, 40 (and the first and second profiles 3, 4 as well).

In this way, it is possible to remove only the first air diffuser profile 7 and/or only the second air diffuser profile 7 and to replace each of them with a new air diffuser profile, which can have the same shape body or even a different shape body with respect to that of the removed air diffuser profile 7, thus allowing to easily modify and, when desired, to customize the configuration previously adopted.

In yet a further possible embodiment, each of the first profile 3, the second profile 4 and the air diffuser profile 7 is configured to be removed independently from the other profiles of said first and second profiles 3, 4 and first air diffuser profile 7 (as well as independently from the third and fourth profiles 30, 40 and the second air diffuser profile 7).

Likewise, in another possible embodiment, each of the third profile 30, the fourth profile 40 and the second air diffuser profile 7 is configured to be removed independently from the other profiles of said third and fourth profiles 30, 40 and second air diffuser profile 7 (as well as independently from the first and second profiles 3, 4 and the first air diffuser profile 7).

In this way, it is possible to remove each of the profiles 3, 4, 30, 40 and 7 independently from the others, and to replace the removed profile with a new one, which can have the same shape body or even a different shape body with respect to that removed, thus allowing to easily modify and customize the configuration previously adopted.

In a possible embodiment, the first air diffuser profile 7 has a shaped body configured to be mechanically connected, in a removable way, to one of the first profile 3, or the second profile 4.

In a possible embodiment, the second air diffuser profile 7 has a shaped body configured to be mechanically connected, in a removable way, to one of the third profile 30 or the fourth profile 40.

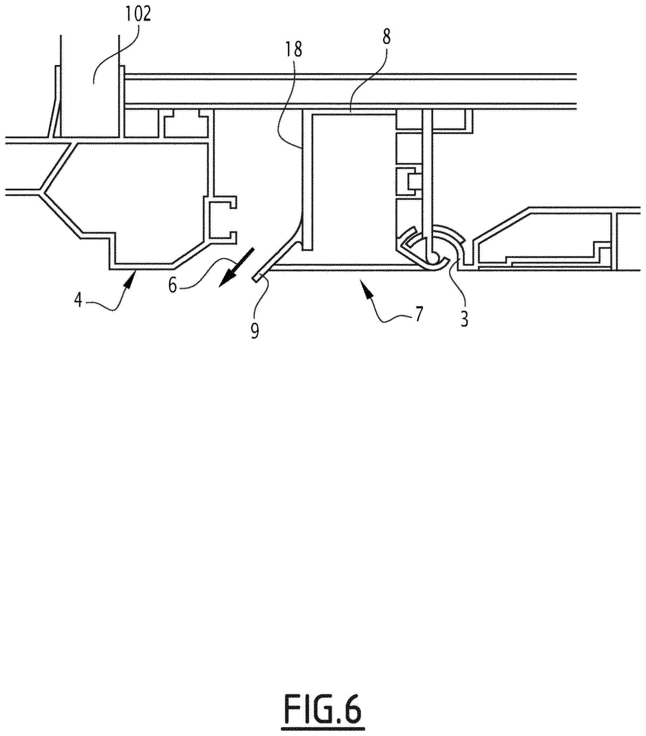

For instance, figure 3 shows the second air profile 7 which is mechanically coupled, in a removable way, to the third profile 30, and figure 6 shows the second air profile 7 which is mechanically coupled, in a removable way, to the fourth profile 40.

In a possible embodiment, the modular ceiling according to the present invention further comprises one or more cover plates, wherein the or each cover plate is suitable to be installed along the longitudinal axis X at a selectable position and is configured to close at least partially the air gap A1 and/or the air gap A2 at the selected position.

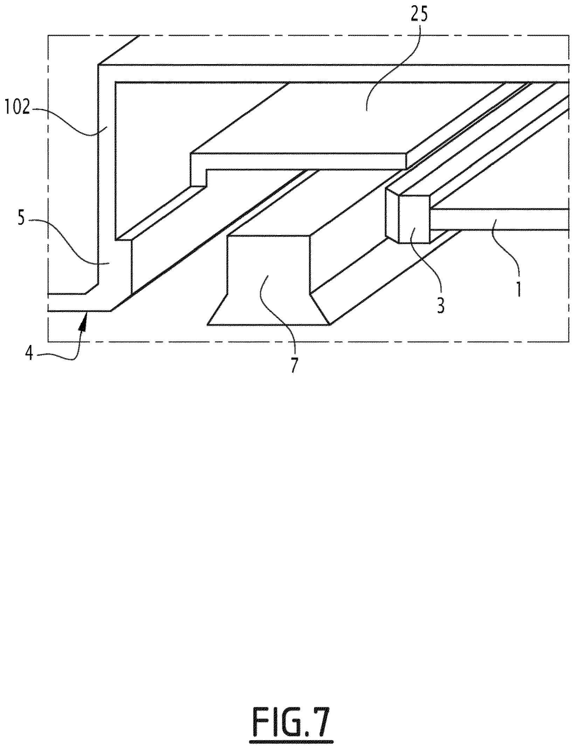

An example of such one or more cover plates is schematically illustrated in figure 7 where the only cover plate represented is indicated by the reference number 25.

In this way, it is possible to further and easily adjust the airflows along the modular ceiling 100 according to the specific applications.

In the following part of the description, reference will be made generically to an air diffuser profile 7 for the sake of simplicity, and what described has to be intended as applicable to the first air diffuser 7 and/or to the second air diffuser 7.

In one possible embodiment, the air diffuser profile 7 comprises a shaped body which comprises, seen in a plan perpendicular to the longitudinal axis X (i.e. a plan containing the transversal direction Y and a direction of a vertical axis Z transversal to both the direction of axis X and Y), an upper mounting portion 8 which is suitable to be connected to a mounting part 130 of the railway vehicle, and a lower portion which includes two wings 9 which protrude each from a corresponding side of the upper mounting portion 8, and diverge from each other.

In the exemplary embodiment of figure 1 (see left side), when seen in said plan perpendicular to the longitudinal axis X, the upper mounting portion 8 of the air diffuser profile 7 is substantially C-shaped, and the two wings 9 of the lower portion protrude each from a corresponding lower corner of the C-shaped portion 8. The lower part of the profile 7 comprises also a substantially flat base 10 which connects the free end of the two wings 9.

In the exemplary embodiment of figure 2, when seen in said plan perpendicular to the longitudinal axis X, the upper mounting portion 8 has a straight upper section suitable to be connected to a mounting part of the railway vehicle, and two sides 12 and 13 which protrude from the straight upper section 8 and extend each substantially rectilinearly and downwardly along the vertical direction Z transversal to said longitudinal axis X and to said traversal direction Y.

According to this exemplary embodiment, the two wings 9 of the lower portion protrude each from a bottom end of a corresponding side 12 and 13. Also in this embodiment, the lower part of the profile 7 comprises also a substantially flat base 10 which connects the free end of the two wings 9.

In the exemplary embodiment of figure 4, when seen in said plan perpendicular to the longitudinal axis X, the upper mounting portion 8 is substantially U-shaped, and the two wings 9 protrude each from a corresponding corner of the U-shaped portion 8.

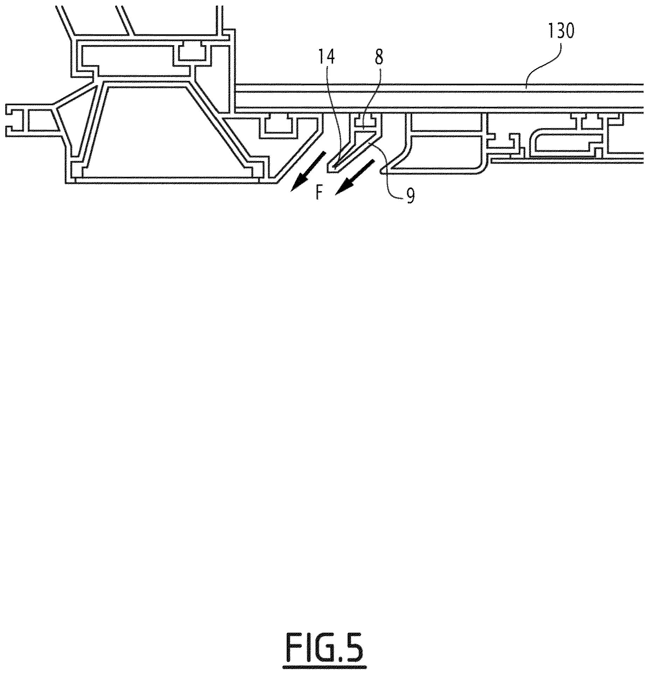

According to another possible embodiment, as illustrated in figure 5, the air diffuser profile 7 comprises a shaped body which comprises, seen in said transversal plan perpendicular to the longitudinal axis X, an upper portion 8 which is suitable to be connected to a mounting part 130 of the railway vehicle, and a lower portion which includes two inclined sides 9 which protrude from the upper portion 8 and converge merging to each other.

According to yet a further possible embodiment, as illustrated on the right side of figure 1, the air diffuser profile 7 comprises a shaped body which comprises, seen in said transversal plan perpendicular to the longitudinal axis X, an upper portion 8 which is suitable to be connected to a mounting part of the railway vehicle, and a lower portion which includes two inclined sides 9 which protrude from the upper portion 8 substantially parallel to each other.

According to yet a further possible embodiment, as illustrated in figures 3 and 6, the air diffuser profile 7 comprises a shaped body which comprises, seen in said transversal plan perpendicular to the longitudinal axis X, an upper portion 8 which is suitable to be connected to a mounting part of the railway vehicle, a central portion 18 which protrudes from the upper portion 8 and extends substantially rectilinearly and downwardly along the vertical direction Z, and a lower portion having a wing 9 which protrudes from the rectilinear central portion 18 along a direction inclined relative to the rectilinear central portion itself.

In particular, in the embodiment of figure 3, the air diffuser profile 7 is for example the second air profile 7 and is shown mechanically coupled to the third profile 30 and the wing 9 of the lower portion protrudes from ta rectilinear central portion 18 in a direction away from the first panel 1.

In the embodiment of figure 6, the air diffuser profile 7 is for instance the first air profile diffuser 7 and is shown mechanically coupled to the first profile 3, and the wing 9 of the lower portion protrudes from a rectilinear central portion 18 in a direction away from the first panel 1.

Clearly, the first or the second air diffuser profiles 7 can be connected also to the second profile 4 or to the fourth profile 40, respectively; in such cases, the wing 9 of the lower portion protrudes from the rectilinear central portion 18 in a direction towards the first panel 1.

In practice, it has been found that the modular ceiling 100 according to the present invention allows obtaining a modular structure where the various components may be produced more conveniently, and can be installed and replaced more easily, allowing a high flexibility and customization of applications.

Indeed, the modular structure of the ceiling 100 does not require to realize openings and/or outlets via machining, is efficient from an aerodynamic point of view, and is optimized also aesthetically since the vanes/spaces between the roof of the vehicle and the ceiling 100, inside which the various technical components, networks of ducts, cables et cetera, are installed, are rendered substantially invisible to passengers, and the various functions whose components are somehow associated or related to the ceiling, e.g. lighting and air distribution, can be adjusted independently from each other when desired.

## Claims

1. Modular ceiling (100) for a railway vehicle, **characterized in that** it comprises at least:
- a first panel (1) which is suitable to be part of or associated to an air duct (101) arranged for circulating air inside the railway vehicle, said first panel (1) being suitable to be installed in and extending along a longitudinal axis (X) of the railway vehicle;
- a first profile (3) which is configured for being connected to one side of the first panel (1) and extends along said longitudinal axis (X);
- a second profile (4) which is suitable to be installed in the railway vehicle extending along said longitudinal axis (X) facing to and spaced apart from the first profile (3), wherein an air gap (A1) is formed between the first and second profiles (3, 4) along said longitudinal axis (X);
- a first air diffuser profile (7) which is suitable to be installed in the railway vehicle at said air gap (A1) between said first and second profiles (3, 4) and in a position adjustable along a direction (Y) transversal to said longitudinal axis (X) to adapt the orientation and/or distribution of air flows via the air gap (A1) itself.

2. The modular ceiling (100) as in claim 1, wherein the first air diffuser profile (7) has a shaped body configured to provide a bidirectional distribution of airflows (F1, F2) inside the railway vehicle.

3. The modular ceiling (100) as in claim 1, wherein the first air diffuser profile (7) has a shaped body configured to provide a mono-directional distribution of airflows (F) inside the railway vehicle.

4. The modular ceiling (100) as in any one of the previous claims, wherein at least said first air diffuser profile (7) is configured to be removed independently from the said first and second profiles (3, 4,).

5. The modular ceiling (100) as in any one of the previous claims, wherein each of the first profile (3), the second profile (4) and the first air diffuser profile (7) is configured to be removed independently from the other profiles of said first and second profiles (3, 4) and said first air diffuser profile (7).

6. The modular ceiling (100) as in any one of the previous claims, wherein said first air diffuser profile (7) has a shaped body configured to be mechanically connected, in a removable way, to one of the first profile (3) or the second profile (4).

7. The modular ceiling (100) as in any one of the previous claims, wherein it further comprises one or more cover plates (25), wherein the or each cover plate (25) is suitable to be installed along the longitudinal axis (X) at a selectable positon and is configured to close at least partially the air gap (A1) at the selected position.

8. The modular ceiling (100) as in any one of the previous claims, wherein, when seen in a transversal plan containing said transversal direction (Y), said first air diffuser profile (7) comprises a shaped body having an upper portion (8) which is suitable to be connected to a mounting part (130) of the railway vehicle, and a lower portion which includes two wings (9) which protrude each from a corresponding side of the upper mounting portion (8), said two wings (9) being configured to diverge from each other, or alternately to converge merging to each other, or to extend substantially parallel to each other.

9. The modular ceiling (100) as in any one of the claims 1 to 7, wherein, when seen in a transversal plan containing said transversal direction (Y), said first air diffuser profile (7) comprises a shaped body having an upper portion (8) which is suitable to be connected to a mounting part (130) of the railway vehicle, a central portion (18) which protrudes from the upper portion (8) and extends substantially rectilinearly along a vertical direction (Z) transversal to said longitudinal axis (X) and to said traversal direction (Y), and a lower portion having a wing (9) which protrudes from the central portion (18) along a direction inclined relative to the rectilinear central portion (18) itself.

10. A railway vehicle comprising a modular ceiling (100) as in any one of the previous claims.
